# EUROPEAN PATENT APPLICATION

(11) **EP 1 776 903 A1**
(43) Date of publication of application: **25.04.2007**
(21) Application number: 06425709.0
(22) Date of filing: 16.10.2006
(51) Int. Cl.: A47J 17/16, A23N 7/02

(54) **Fruit & vegetables electric peeler and chopper**

(30) Priority: 24.10.2005 IT PC20050057
(71) Applicant: Venturati, Simone, 29100 Piacenza (IT)
(72) Inventor: Venturati, Simone, 29100 Piacenza (IT)

(57) **Abstract**

This fruit and vegetables electric peeler and chopper is an useful machine to peel and chop fruit and vegetables (from now on: "fruit") automatically, without using manual instruments or getting your hands dirty, allowing you to save time and the effort. Moreover, this tool can remove the fruit core, in case of necessity. First the fruit is put on a revolving support (that is the blade that cuts the fruit), then a footstock holds the fruit up (the footstock will push the fruit against the blade, in order to chop it and to remove the core). While the fruit is spinning, a revolving blade, which is provided with an elastic system which presses it on the fruit, held to the right depth by a tracer point, moves parallel to the rotation axis of the fruit, moving on its profile, so that the fruit is completely peeled. Later the footstock pushes the fruit against the blade, which supports it, so that it is sliced and the core is removed (if necessary). There is also the possibility of using a different blade, which moves parallel to the rotation axis of the fruit and slices it horizontally and at the same time removes the fruit core, if necessary.

## Description

Before proceeding with the illustration of this new machine, it's worth stressing that one of the last problems still existing in cooking is that of peeling fruit and vegetables (from now on: "fruit") by hand, a procedure that means a waste of time and energies, gets your hands dirty and, last but not least, expose you to the risk of injury. Nowadays people still use a knife or a manual peeler provided with a slot in the centre of a blade to chop and peel; a machine provided with a revolving drum is sometimes used to peel only potatoes but this system can easily bruise the fruit and peel it only partially. For these reasons a new tool to peel and chop fruit has been projected and produced, in order to get an accurate peeling and to avoid the useless waste of pulp by the peel. This fruit and vegetables electric peeler and chopper (from now on: peeler) is a compound machine, consisting of combined components that enable anyone to get an accurate peeled and chopped fruit. An electric cable or a battery feeds the peeler. When the peeler is fed by battery, the machine can be placed on the table. A description is provided here to show the practical realization of this well-thought-out machine; the following description refers to the attached tables as non-restrictive example of assemblage. The tables show the tridimensional pictures of the machine from two different point of views, in which these components can be easily distinguished: 1 - revolving support provided with a cutting blade (from now on: revolving support); 2 - footstock to hold the fruit up and to press it in order to cut the fruit (from now on: footstock); 3 - supporting arm of the revolving blade to peel the fruit (from now on: arm); 4 - cut-depth tracer point to remove the fruit skin (from now on: tracer point); 5 - the machine body; 6 - security cap; 7 - electromotors; 8 - revolving blade; 9 - horizontal cutting blade (from now on: fixed blade); 10 - peeled skin thickness regulator (from now on: regulator). 1. The revolving support is set on the machine body and consists of a double function cutting blade, which supports the fruit to be peeled and/or chopped ; the first function consists in supporting the fruit and making it spin; the second one consists in cutting and if necessary in removing the fruit core, when the footstock presses it against the cutting blade. 2. The footstock is opposite the revolving support, on the same axis and on the opposite extremity; it is situated on a sliding vector. It has got a double function: the first one is that of holding the fruit up to allow the rotation and the second one is that of pushing it against the revolving support, that is the blade, which chops the fruit and removes its core if necessary. 3. The arm is situated on a sliding vector, on which it moves parallel to the fruit rotation axis (from now on: axis) lengthwise; at the same time the arm has its pivot on the sliding vector and turns perpendicular to the axis. The arm function is that of supporting the revolving blade, which peels the fruit; an elastic system presses the arm softly on the fruit and holds the revolving blade position against the fruit; its depth is regulated by a tracer point, according to the peel thickness, which is marked by a regulator. Through these movements the arm allows the revolving blade to move on the profile of the fruit, which turns opposite the revolving blade cutting edge direction, so that the fruit is completely peeled. 4. The tracer point is situated by the revolving blade; the regulator drives it and the tracer point defines the cutting depth, according to the peel thickness to remove. 5. The machine body represents the machine structure and it works in order to combine all the components in unity, building a single machine. 6. The security cap is placed on the machine body and it's useful in order to cover the fruit and the blades during the operations; in such a way the peeler is a perfectly safe and healthy tool. 7. Electromotors are situated inside the machine and produce all mechanical movements. 8.The revolving blade is situated on the arm and its function is that of peeling the fruit. It is coffee-cup-shaped and has got a sharp edge. 9. The fixed blade is situated on the arm and produces a double function: it can remove the core and/or slice the fruit perpendicularly to the axis, which turns opposite the fixed blade cutting edge direction, so that the fruit is perfectly sliced up. Its section consists of two perpendicular sides and one of them is parallel to the axis. The blade cutting edge is opposite the rotation direction. 10. The regulator is placed on the machine body and marks previously the peel thickness of the fruit, according to the different kinds of fruit. Here is a detailed step-by-step procedure: Open the security cap, put the fruit on the centre of the revolving support, block it in the centre with the opposite footstock, close the security cap. Adjust the thickness of the peel to be removed, according to the different kinds of fruit, using the regulator. Push the switch button and the peeling procedure starts. The revolving blade placed on the arm and the fruit start spinning. The arm starts moving parallel to the axis and pushes the revolving blade against the fruit; the tracer point drives the revolving blade, which starts peeling the fruit progressively, moving wholly on its profile. Now the fruit is completely peeled and the arm gains automatically its original position. Open the security cap again, remove the peel-box and clear it out. If there is no need to remove the core and/or to chop the fruit, just take the peeled fruit away; otherwise, push the footstock against the fruit and the fruit is pushed against the revolving support, which chops it and removes its core, if necessary. Pick up the peeled, chopped and if necessary coreless fruit from the specific box. There is also the possibility to slice the fruit horizontally, using a fixed blade, placed on the arm; the fixed blade slices the fruit and separates the pulp from the core, if necessary. These are schematic procedures, sufficient to the expert in order to realize the new machine; therefore there could be practically many different variations to introduce, which would not affect the original significance of this innovative conception. The following claims are laid with reference to the description above and to the attached pictures.

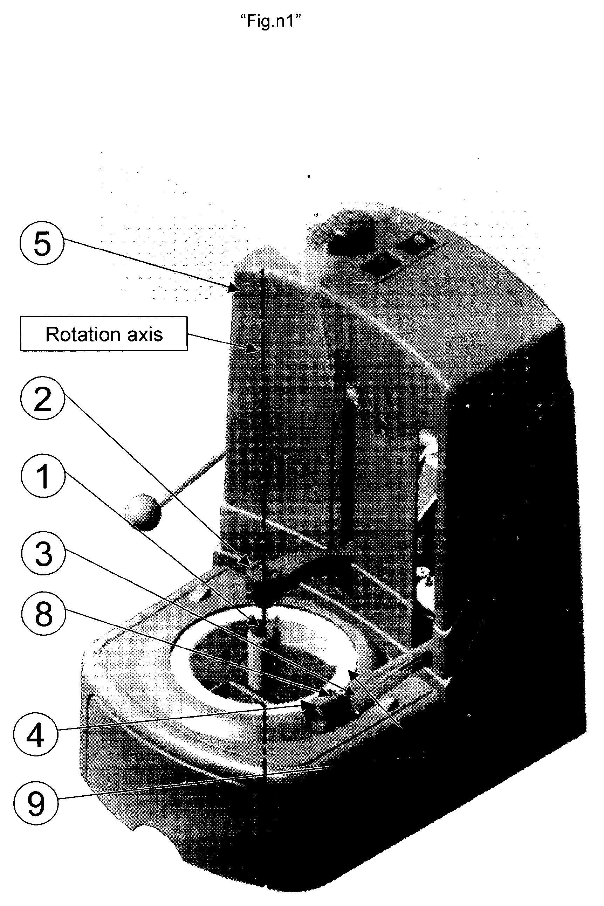

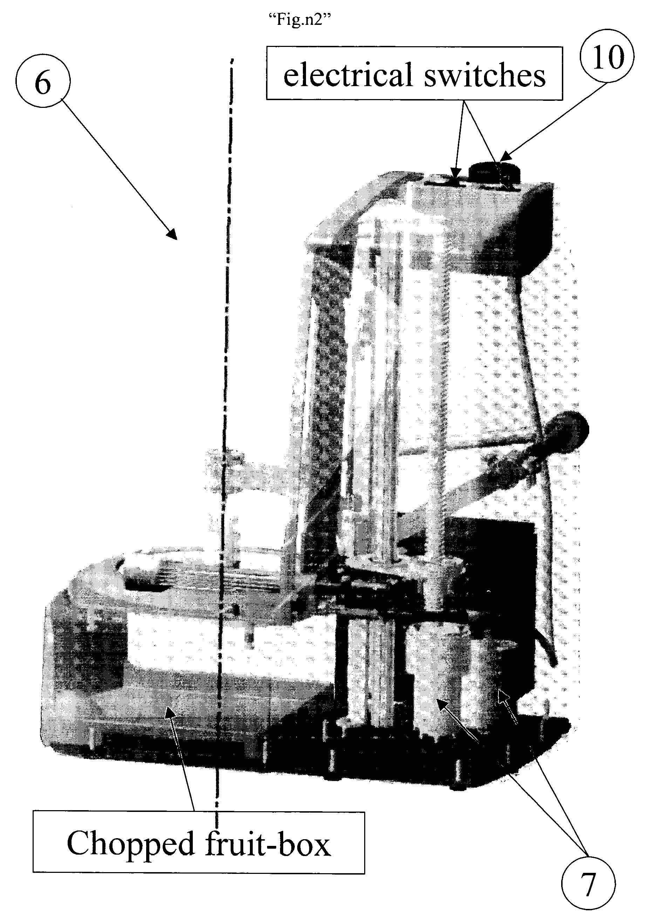

## Claims

1. The fruit and vegetables electric peeler and chopper, being a tool, **characterized by** the combination of elements, indicated in the following claims, which will attain its goal with great and unique precision.

2. The fruit and vegetables electric peeler and chopper, as claimed in claim 1, **characterized by** a revolving support, on which the fruit is placed and which is at the same time a blade that cuts vertically the fruit and remove the core if necessary. This blade is interchangeable with other blades, according to the different cutting or chopping required. Each blade always presents a cutting edge turned towards the fruit.

3. The fruit and vegetables electric peeler and chopper, as claimed in claims 1,2, **characterized by** a cutting blade to peel the fruit, **characterized by** a coffee-cup shaped revolving blade with a sharp edge on the border, opposite the fruit spinning direction.

4. The fruit and vegetables electric peeler and chopper, as claimed in claims 1, 2, 3, **characterized by** a fixed blade to slice horizontally, with a section consisting of two perpendicular sides with each other and one of them being parallel to the rotation axis of the fruit. The blade cutting edge is opposite the fruit spinning direction, allowing the horizontal cutting and if necessary the core removing.

5. The fruit and vegetables electric peeler and chopper, as claimed in claims 1, 2, 3, 4, **characterized by** a security cap, that is a necessary cover to avoid any injury. The machine works only when the security cap is closed.

6. The fruit and vegetables electric peeler and chopper, as claimed in claims 1, 2, 3, 4, 5, **characterized by** a footstock, which is both a fastener of the fruit opposite the revolving support and it is an instrument that pushes the fruit against the blade on the revolving support to chop it vertically.

7. The fruit and vegetables electric peeler and chopper, as claimed in claims 1, 2, 3, 4, 5, 6, **characterized by** a tracer point, which is a measure regulator that defines the cutting depth of the revolving blade, according to the peel thickness to remove and to the kinds of fruit to be peeled.

8. The fruit and vegetables electric peeler and chopper, as claimed in claims 1, 2, 3, 4, 5, 6, 7, which is fed electrically by both electric cable and battery. Mechanical movements are produced by one or more electromotors, which are driven by an electrical system that can be equipped with one or more electronic cards.

9. The fruit and vegetables electric peeler and chopper, as claimed in claims 1, 2, 3, 4, 5, 6, 7, 8, **characterized by** a regulator, which can be driven by hand, by electric system or electronically, wherein the improvement consists in marking previously the peel thickness of the fruit to be peeled, according to the different kinds of fruit.

10. The fruit and vegetables electric peeler and chopper, as claimed in previous claims, whose production and marketing are protected by this industrial invention patent, as it has been described and illustrated in the present document.
